# EUROPÄISCHE PATENTSCHRIFT

(11) **EP 2 422 597 B1**
(45) Veröffentlichungstag und Bekanntmachung des Hinweises auf die Patenterteilung: **18.01.2017**
(21) Anmeldenummer: 11401571.2
(22) Anmeldetag: 15.08.2011
(51) Int. Cl.: A01B 29/04, A01B 29/06, A01B 73/00

(54) **Fahrwerk für ein landwirtschaftliches Gerät**
Undercarriage for an agricultural device
Châssis pour un appareil agricole

(30) Priorität: 23.08.2010 DE 102010037108
(43) Veröffentlichungstag der Anmeldung: 29.02.2012
(73) Patentinhaber: Amazonen-Werke H. Dreyer GmbH & Co. KG, 49205 Hasbergen (DE)
(72) Erfinder: Ammermann, Wilfried, 26203 Wadenburg (DE); Feldhaus, Werner, 27801 Dötlingen/Geveshausen (DE)

(56) Entgegenhaltungen:
- EP-A2- 1 614 335
- WO-A1-03/037063
- WO-A1-2005/115124
- FR-A1- 2 886 511

## Beschreibung

Die Erfindung betrifft ein Fahrwerk für ein landwirtschaftliches Gerät gemäß des Oberbegriffes des Patentanspruches 1.

Ein derartiges Fahrwerk für ein landwirtschaftliches Gerät ist beispielsweise durch die DE 197 46 927 C2 bekannt. Diese landwirtschaftliche Maschine ist als Sämaschine ausgebildet und weist im hinteren Bereich zueinander versetzte Stützräder auf, wobei die dem mittleren Bereich der Sämaschine zugeordneten Stützräder als Fahrwerk dienen können. Beim Befahren von Straßen und/oder Wegen mit einer zentralen Dammkrone ergibt sich ein instabiles Fahrverhalten.

Um diesem Problem entgegenzuwirken, ist es durch die EP 1 510 119 B1 bekannt, die im Mittelbereich neben den äußeren der als Fahrwerk dienenden Räder für den Transportangeordneten Rädern vom Rahmen zu entkoppeln. Dann stützt sich die Maschine nur auf den äußeren Rädern ab, so dass sich ein stabiles Fahrverhalten beim Transport ergibt. Diese Ausgestaltung ist jedoch sehr aufwändig. Weiterhin sind sämtliche Räder der Walze in einer Linie angeordnet, dies hat Verstopfungsprobleme zur Folge.

Ein Fahrwerk für ein landwirtschaftliches Gerät ist auch aus der FR 2 886 511 bekannt. Dabei können die Reifen zwischen einer Arbeits- und einer Transportposition verstellt werden.

Der Erfindung liegt die Aufgabe zu Grunde, auf einfache Weise ohne zusätzliche Umstellmaßnahmen ein stabiles Fahr- und Bremsverhalten des Gerätes auch auf Straßen und Wegen mit zentralen Dammkronen zu erreichen.

Diese Aufgabe wird erfindungsgemäß dadurch gelöst, dass zumindest einige der Reifen mittels der Schwingen in Transportstellung des Gerätes derart an dem Tragbalken angeordnet sind, dass eine an die Aufstandsfläche der Reifen auf dem Boden angelegte Hüllkurve einen zur Mitte des Gerätes ansteigenden Verlauf aufweist.

Infolge dieser Maßnahme wird bei Fahrwerken für landwirtschaftliche Geräte, bei denen in erfindungsgemäßer Weise die Reifen der Walze in Fahrtrichtung entsprechend zueinander versetzt sind, durch die Umstellung von der Arbeitsposition auf die Transportposition in überraschend einfacher Weise erreicht, dass im wesentlichen nur äußere Räder als Fahrwerk dienen, das heißt, dass diese Räder mit der größten Belastung von dem Gewicht des Gerätes beaufschlagt werden. Somit ergibt sich also auch gleichzeitig ein sehr gutes Bremsverhalten für das Gerät, wenn äußere Räder, die der größten Belastung unterliegen, für das Bremsen des Gerätes mit Bremseinrichtungen versehen sind.

Eine vorteilhafte Anordnung der Räder in erfindungsgemäßer Weise lässt sich dadurch erreichen, dass die Hüllkurve torbogenförmig verläuft.

Um das erfindungsgemäße stabile Fahr- und Bremsverhalten in einfacher Weise zu erreichen, ist vorgesehen, dass die Hüllkurve konkav verläuft.

Um die erfindungsgemäße Anordnung und Wirkung in einfacher Weise zu erreichen, ist vorgesehen, dass einer an die vorderste und/oder hinterste Umfangsfläche der Reifen der sich in Arbeitsstellung befindlichen Walze angelegten Hüllkurve in der Ansicht von oben gekrümmt verläuft und zwar derart, dass bezogen auf die Fahrtrichtung die Hüllkurve konkav ausgestaltet ist.

Um ein stabiles und gutes Bremsverhalten des Gerätes zu erreichen, ist vorgesehen, dass zumindest den jeweils seitlich äußersten Reifen der Walze eine Bremseinrichtung zugeordnet ist.

Zusammenfassend sei noch auf folgendes hingewiesen:
Die die als Reifen ausgebildeten Räder der Walzen haben einen gewissen Achsversatz zueinander. Hierdurch gibt es immer eine Relativbewegung der Reifen unter einander und die Verstopfungsempfindlichkeit nimmt ab. Bei der Transportfahrt lastet das Gewicht der Maschine auf den äußeren Reifen, so dass auf mittig überhöhten Straßen und/oder Wegen die Kippgefahr abnimmt und die das Gewicht tragenden äußeren Räder mit einer Bremse ausgestattet werden können, um die Maschine bremsen zu können.

Weitere Einzelheiten der Erfindung sind der Beispielsbeschreibung und den Zeichnungen zu entnehmen. Hierbei zeigen
- Fig. 1: die als Fahrwerk ausgebildete Walze des landwirtschaftlichen Gerätes in Arbeitsstellung und perspektivischer Darstellung,
- Fig. 2: die als Fahrwerk ausgebildete Walze des landwirtschaftlichen Gerätes in Arbeitsstellung und Seitenansicht,
- Fig. 3: die als Fahrwerk ausgebildete Walze des landwirtschaftlichen Gerätes in Arbeitsstellung und in der Ansicht von vorne,
- Fig. 4: die als Fahrwerk ausgebildete Walze des landwirtschaftlichen Gerätes in Arbeitsstellung und in der Draufsicht,
- Fig. 5: die als Fahrwerk ausgebildete Walze des landwirtschaftlichen Gerätes in Transportstellung und perspektivischer Darstellung,
- Fig. 6: die als Fahrwerk ausgebildete Walze des landwirtschaftlichen Gerätes in Transportstellung und Seitenansicht,
- Fig. 7: die als Fahrwerk ausgebildete Walze des landwirtschaftlichen Gerätes in Transportstellung und in der Ansicht von vorne,
- Fig. 8: eine weitere als Fahrwerk ausgebildete Walze des landwirtschaftlichen Gerätes in Arbeitsstellung und perspektivischer Darstellung,
- Fig. 9: die als Fahrwerk ausgebildete Walze des landwirtschaftlichen Gerätes gemäß Fig. 8 in Arbeitsstellung und in der Ansicht von vorne,
- Fig. 10: die als Fahrwerk ausgebildete Walze des landwirtschaftlichen Gerätes gemäß Fig. 8 in Arbeitsstellung und in der Draufsicht,
- Fig. 11: die als Fahrwerk ausgebildete Walze des landwirtschaftlichen Gerätes gemäß Fig. 8 in Transportstellung und in der Ansicht von vorne,
- Fig. 12: eine weitere als Fahrwerk ausgebildete Walze des landwirtschaftlichen Gerätes in Arbeitsstellung und perspektivischer Darstellung,
- Fig. 13: die als Fahrwerk ausgebildete Walze des landwirtschaftlichen Gerätes gemäß Fig. 12 in Arbeitsstellung und in der Ansicht von vorne,
- Fig. 14: die als Fahrwerk ausgebildete Walze des landwirtschaftlichen Gerätes gemäß Fig. 12 in Arbeitsstellung und in der Draufsicht,
- Fig. 15: die als Fahrwerk ausgebildete Walze des landwirtschaftlichen Gerätes gemäß Fig. 12 in Transportstellung und in der Ansicht von vorne,
- Fig. 16: eine weitere als Fahrwerk ausgebildete Walze des landwirtschaftlichen Gerätes in Arbeitsstellung und perspektivischer Darstellung,
- Fig. 17: die als Fahrwerk ausgebildete Walze des landwirtschaftlichen Gerätes gemäß Fig. 16 in Arbeitsstellung und in der Ansicht von vorne,
- Fig. 18: die als Fahrwerk ausgebildete Walze des landwirtschaftlichen Gerätes gemäß Fig. 16 in Arbeitsstellung und in der Draufsicht und
- Fig. 19: die als Fahrwerk ausgebildete Walze des landwirtschaftlichen Gerätes gemäß Fig. 16 in Transportstellung und in der Ansicht von vorne.

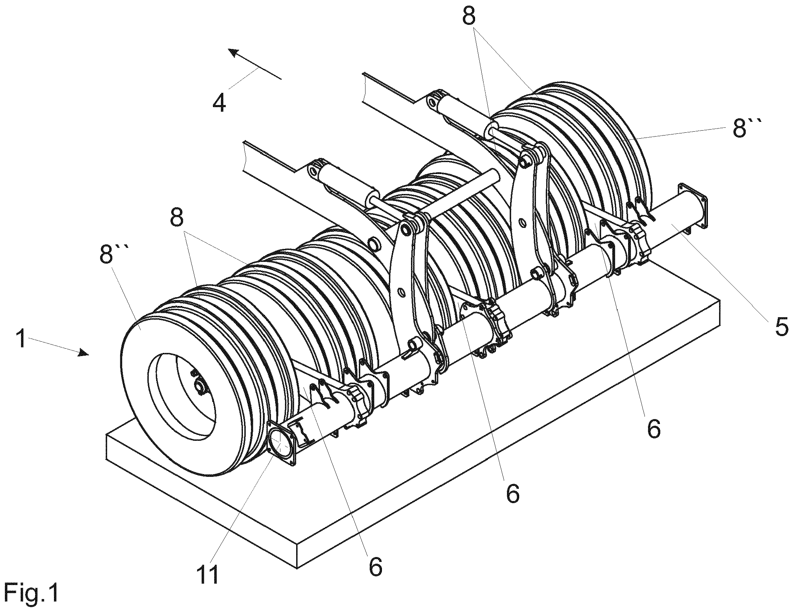

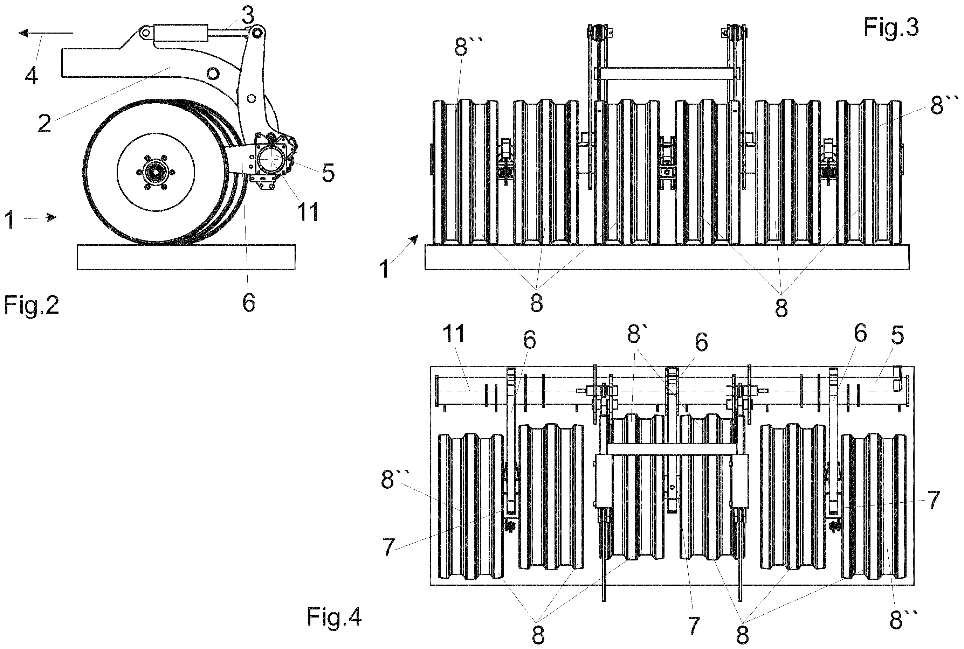

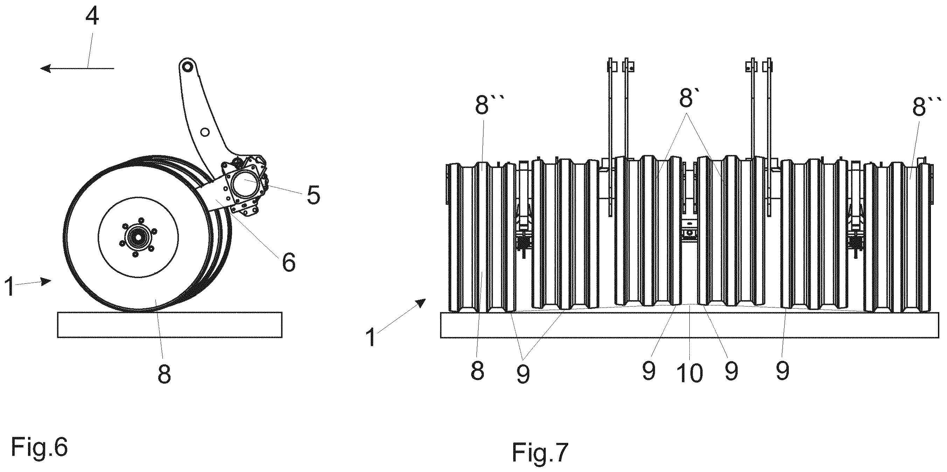

Die Walze 1 gemäß den Fig. 1 bis 7 ist einem Bodenbearbeitungsgerät und/oder Verteilmaschine zugeordnet. Über die Kupplungselemente 2 ist die Bodenwalze mit dem Rahmen des Bodenbearbeitungsgerätes und/oder der Sämaschine gekoppelt. Die Bodenwalze 1 dient neben dem verdichten von gelockertem Boden auch als Fahrwerk für das als Bodenbearbeitungsgerät und/oder Verteilmaschine ausgebildete landwirtschaftliche Gerät, wie weiter unten noch erläutert wird.

Die Walze 1 weist einen sich quer zur Fahrtrichtung 4 erstreckenden Tragbalken 5 auf, an dem über drehfest an dem Tragbalken 5 angeordnete Schwingen 6 die auf Achsen 7 gelagerten Räder 8 befestigt sind. Die Räder 8 weisen Reifen auf, die einen Reifenpacker nach Art einer unterteilten Walze bilden. Die Reifen 8 sind nebeneinander in Reihe angeordnet. In Arbeitsstellung, wie in den Fig. 1 bis 4 gezeigt, sind die Reifen 8 der Walze 1 in Fahrtrichtung 4 versetzt zueinander angeordnet. Hierbei sind die Reifen 8 mittels der Schwingen 6 in der Draufsicht gesehen bezogen auf die Fahrtrichtung 4, so angeordnet, dass eine durch den vordersten Bereich 9 der Reifen 8 gezogene Kurve eine nach hinten durchgedrückte Hüllkurve 10 entsteht. Somit verläuft die an die vorderste Umfangsfläche 9 der Reifen 8 der sich in Arbeitsstellung befindlichen Walze 1 angelegten Kurve in der Ansicht von oben gekrümmt und zwar derart, dass bezogen auf die Fahrtrichtung 4 die Hüllkurve 10 konkav ausgestaltet ist.

Hierbei ist bei diesem Ausführungsbeispiel bei einer geraden Anzahl von Reifen 8 einer Walze 1 die Anordnung so gewählt, dass die beiden mittleren Reifen 8' auf gleicher Höhe und nicht zueinander versetzt sind. Bei diesem Ausführungsbeispiel, die beispielsweise bei einem 3 m Fahrwerk oder 3 m breiten Maschine Anwendung findet, weist also insgesamt sechs Reifen 8 auf.

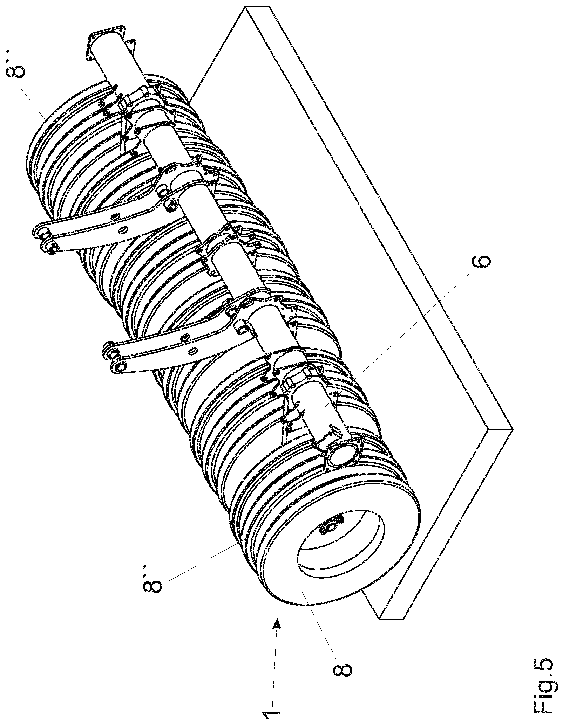

Über die Kupplungselemente 2 und 3 ist die Walze 1 derart am Rahmen des Bodenbearbeitungsgerätes und/oder der Verteilmaschine angeordnet, dass die Walze 1 durch verdrehen des Tragbalkens 5 um die quer zur Fahrtrichtung 4 verlaufende Drehachse 11 aus der in den Fig. 1 bis 4 dargestellten Arbeitsstellung in die in den Fig. 5 bis 7 dargestellten Transportstellung mittels der als Hydraulikzylinder 3 ausgebildeten oberen Kupplungselemente zu verschwenken ist. In der Transportstellung bildet die Walze 1 für den Transport das Fahrwerk. Durch das Verschwenken der Walze 1 sind die Reifen 8 der als Fahrwerk dienenden Walze 1 in eine Transportstellung absenkbar und in einer Arbeitsstellung anhebbar.

Bezogen auf die Transportstellung gemäß den Fig. 5 - 7 sind die Reifen 8 mittels der Schwingen 6 in Transportstellung des Gerätes derart an dem Tragbalken 5 angeordnet, dass eine an die Aufstandsfläche 9 der Reifen 8 auf dem Boden angelegte Kurve 10 einen zu Mitte des Gerätes ansteigenden Verlauf aufweist. Somit ist die Hüllkurve 10 leicht torbogenförmig verlaufend ausgestaltet und weist einen konkaven Verlauf auf.

Die jeweils seitlich äußersten Reifen 8" der Walze 1 ist eine nicht dargestellte Bremseinrichtung zugeordnet. Dadurch, dass die Reifen 8 in erfindungsgemäßer Weise angeordnet sind, werden die seitlich äußersten Reifen 8" der Walze 1 mit der höchsten Stützlast in Transportstellung beaufschlagt. Hierdurch ergibt sich sowohl ein gutes Fahr- wie auch Bremsverhalten für das Fahrwerk des Gerätes.

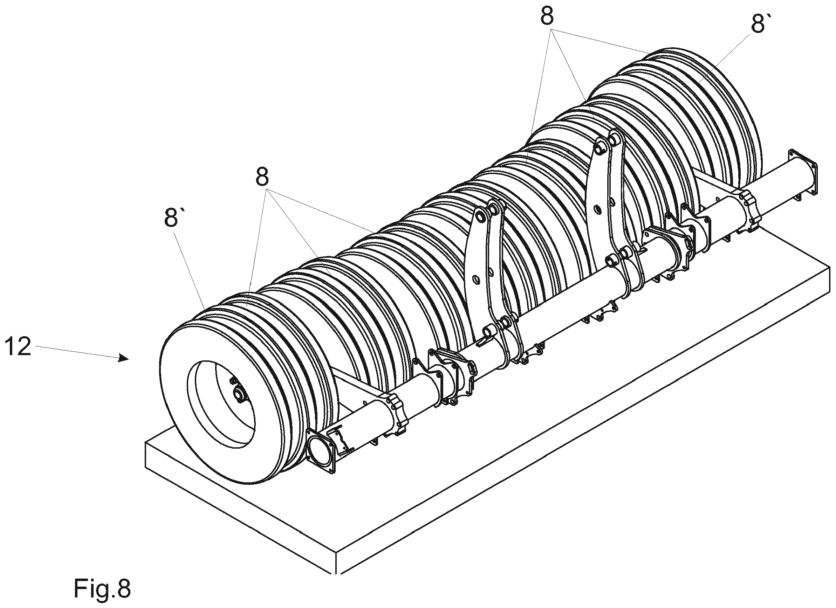

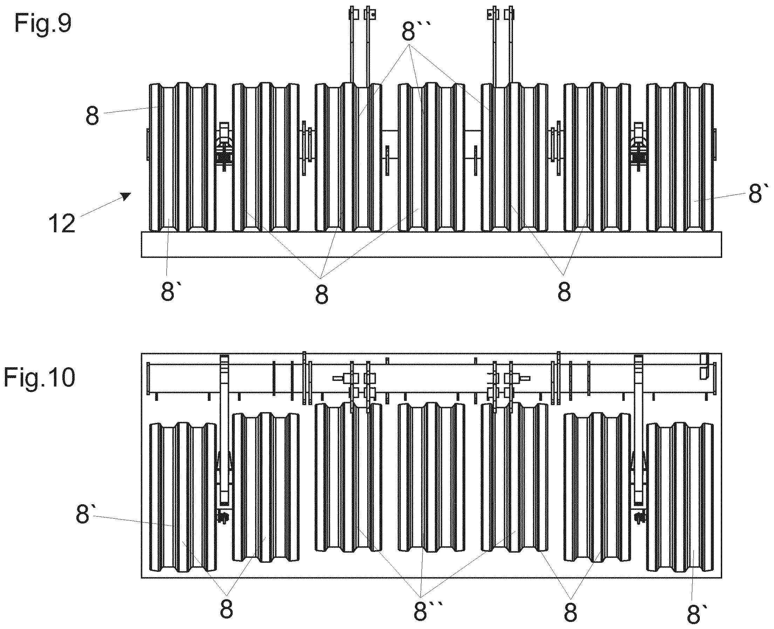

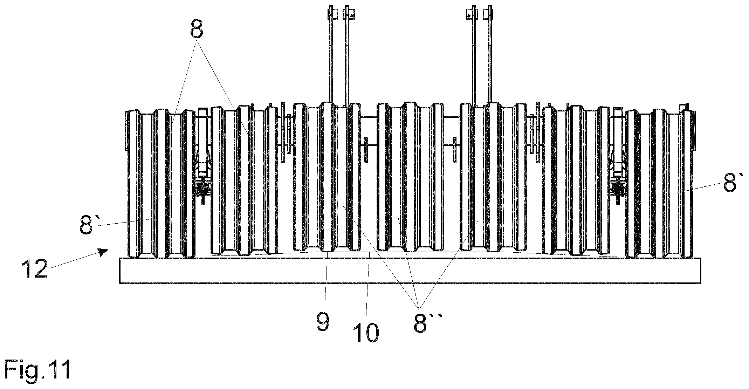

Die Walze 12 gemäß den Fig. 8 bis 11 ist beispielsweise für ein 3,5 m breites Gerät mit einem entsprechend breiten Fahrwerk vorgesehen. Hierbei sind die drei mittleren Reifen 8' nicht versetzt zueinander angeordnet. Die Reifen 8 sind jedoch wiederum derart angeordnet, dass gemäß der Transportstellung nach Fig. 11 einer an die Aufstandsfläche 9 der Reifen 8 auf dem Boden angelegte Hüllkurve 10 einen zu Mitte des Gerätes ansteigenden Verlauf aufweist. Auch diese Hüllkurve 10 ist konkav verlaufend ausgestaltet.

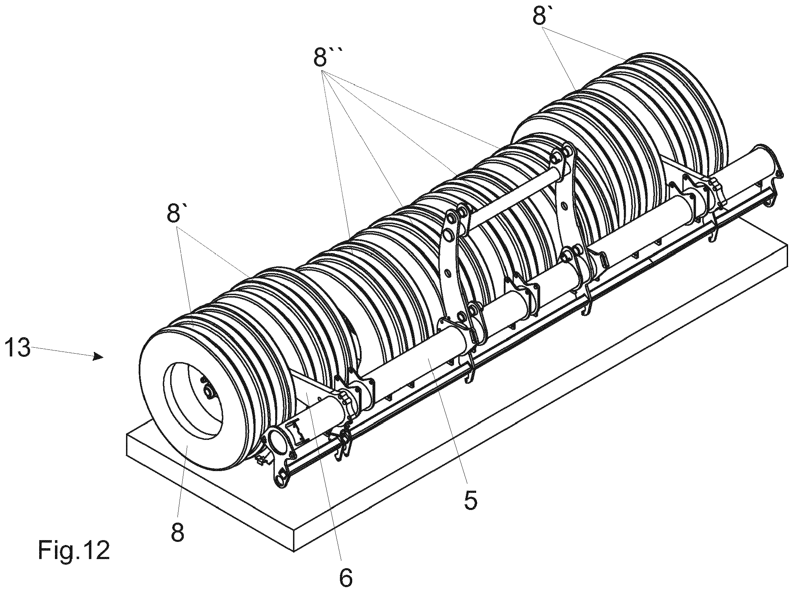

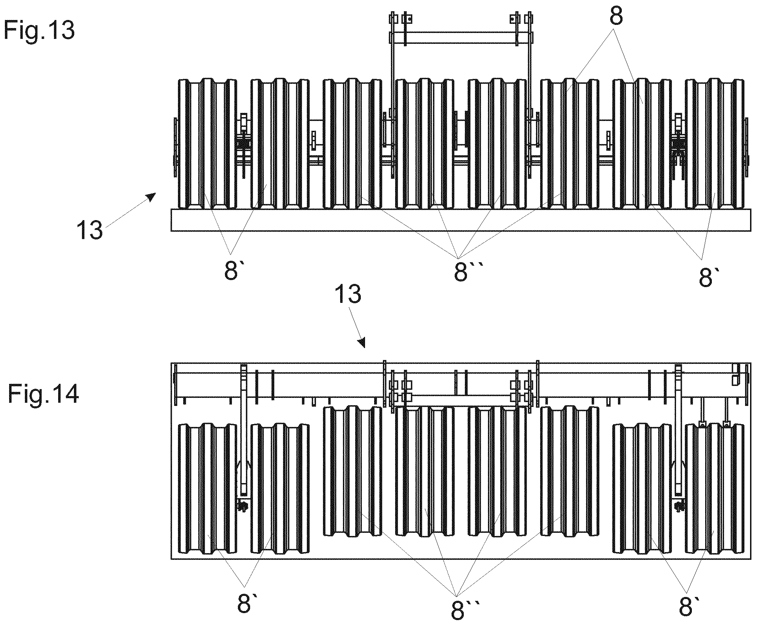

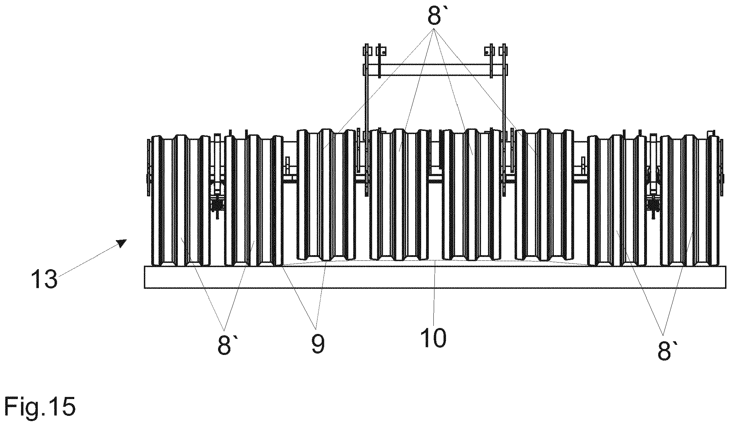

Die Walze 13 gemäß den Fig. 12 bis 15 ist beispielsweise für eine 4 m breites Gerät mit einem entsprechend breiten Fahrwerk vorgesehen. Hierbei sind die vier mittleren Reifen 8' nicht versetzt zueinander angeordnet. Die Reifen 8 sind jedoch wiederum derart angeordnet, dass gemäß der Transportstellung nach Fig. 15 einer an die Aufstandsfläche 9 der Reifen 8 auf dem Boden angelegte Hüllkurve 10 einen zu Mitte des Gerätes ansteigenden Verlauf aufweist. Auch diese Hüllkurve 10 ist konkav verlaufend ausgestaltet.

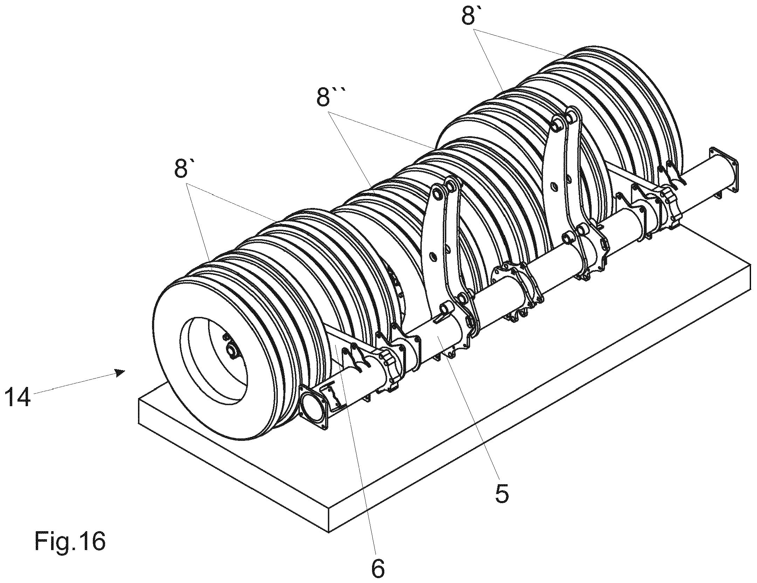

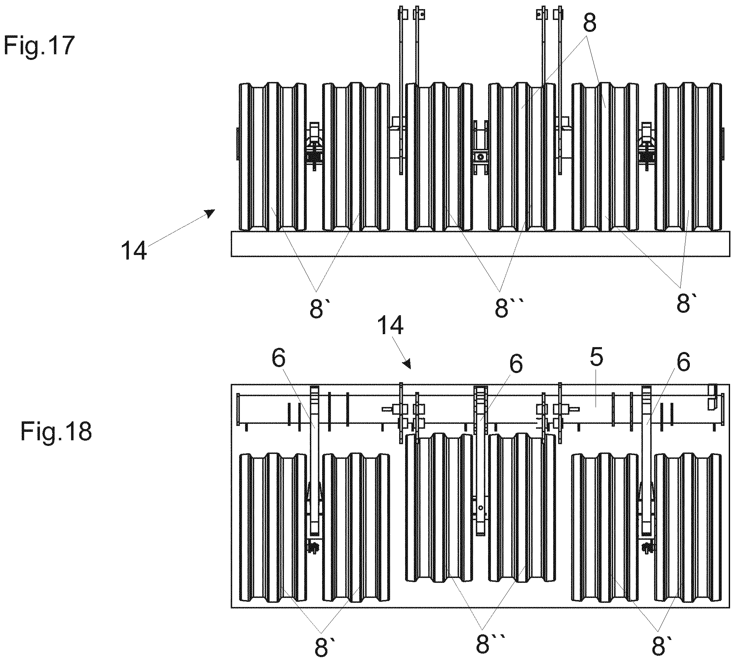

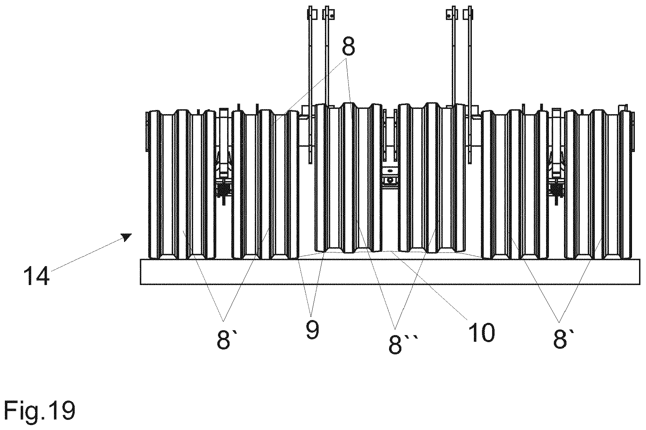

Gemäß den Fig. 16 bis 19 ist der mittlere Teil der Walze 14 eines beispielsweise 6 m breiten Gerätes mit sich an dem mittleren Teil der Walze 14 anschließenden einklappbaren, jedoch nicht dargestellten Seitenteilen von Walzenelementen dargestellt. Der mittlere Teil der Walze 14 weist sechs Reifenelemente 8 auf die teilweise versetzt zueinander angeordnet sind. Die beiden jeweils äußeren Reifen 8' sind auf gleicher Höhe mittels der Schwingen 6 am Tragbalken 5 angeordnet, damit sie gleichzeitig eine große Stützlast der schweren und breiten Maschine aufnehmen können. Auch hier sind die Reifen 8 teilweise, insbesondere auf den mittleren Bereich bezogen, so angeordnet, dass eine an dem mittleren Bereich der Aufstandsfläche 9 der Reifen 8 auf dem Boden angelegte Hüllkurve 10 einen zu Mitte des Gerätes ansteigenden Verlauf aufweist, so dass die Hüllkurve 10 konkav verläuft.

## Patentansprüche

1. Fahrwerk für ein landwirtschaftliches Gerät, insbesondere Bodenbearbeitungs- und/oder Verteilmaschine, mit mehreren nebeneinander in Reihe angeordneten Reifen, die einen Reifenpacker nach Art einer unterteilten Walze (1) bilden, wobei die Reifen (8) mittels drehfest an einem sich quer zur Fahrtrichtung (4) des Gerätes erstreckenden Tragbalken (5) angeordneten Schwingen (6) angeordnet sind, wobei in Arbeitsstellung der Walze (1) zumindest einige der Reifen (8), die einander benachbart sind, in Fahrtrichtung (4) versetzt zueinander angeordnet sind, wobei die Reifen (8) der Walze (1) durch Verdrehen des Tragbalkens (5) um eine quer zur Fahrtrichtung (4) verlaufende Drehachse aus der Arbeitsstellung in eine Transportstellung, in welcher zumindest einige der Reifen (8) das Fahrwerk des Gerätes bilden, absenkbar und aus einer Transportstellung in eine Arbeitsstellung anhebbar sind, **dadurch gekennzeichnet, dass** zumindest einige der Reifen (8) mittels der Schwingen (6) in Transportstellung des Gerätes derart an dem Tragbalken (5) angeordnet sind, dass eine an die Aufstandsfläche (9) der Reifen (8)auf dem Boden angelegte Hüllkurve (10) einen zur Mitte des Gerätes ansteigenden Verlauf aufweist.

2. Fahrwerk nach Anspruch 1, **dadurch gekennzeichnet, dass** die Hüllkurve (10) torbogenförmig verläuft.

3. Fahrwerk nach Anspruch 1, **dadurch gekennzeichnet, dass** die Hüllkurve (10) konkav verläuft.

4. Fahrwerk nach zumindest einem der vorstehenden Ansprüche, **dadurch gekennzeichnet, dass** einer an die vorderste vorderste und/oder hinterste Umfangsfläche (9) der Reifen (8) der sich in Arbeitsstellung befindlichen Walze (1, 12, 13, 14) angelegten Hüllkurve (10) in der Ansicht von oben gekrümmt verläuft und zwar derart, dass bezogen auf die Fahrtrichtung (4) die Hüllkurve (10) konkav ausgestaltet ist.

5. Fahrwerk nach zumindest einem der vorstehenden Ansprüche, **dadurch gekennzeichnet, dass** zumindest den jeweils seitlich äußersten Reifen (8') der Walze (1, 12, 13, 14) eine Bremseinrichtung zugeordnet ist.

## Claims

1. Undercarriage for an agricultural device, in particular soil cultivation and/or distributing machine, with a plurality of tyres which are arranged in a row next to one another and form a tyre packer in the manner of a divided roller (1), wherein the tyres (8) are arranged by means of rockers (6), which are arranged non-rotatably on a supporting bar (5) extending transversely with respect to the direction of travel (4) of the device, wherein, in the working position of the roller (1), at least some of the tyres (8) which are adjacent to one another are arranged offset with respect to one another in the direction of travel (4), wherein, by rotation of the supporting bar (5) about an axis of rotation running transversely with respect to the direction of travel (4), the tyres (8) of the roller (1) can be lowered from the working position into a transport position, in which at least some of the tyres (8) form the undercarriage of the device, and can be raised from a transport position into a working position, **characterized in that** at least some of the tyres (8) are arranged on the supporting bar (5) by means of the rockers (6) in the transport position of the device in such a manner that an envelope (10) applied to the contact area (9) of the tyres (8) on the ground has a profile rising to the centre of the device.

2. Undercarriage according to Claim 1, **characterized in that** the envelope (10) has an arched profile.

3. Undercarriage according to Claim 1, **characterized in that** the envelope (10) has a concave profile.

4. Undercarriage according to at least one of the preceding claims, **characterized in that** an envelope (10) applied to the frontmost frontmost and/or rearmost circumferential surface (9) of the tyres (8) of the roller (1, 12, 13, 14) situated in the working position has a curved profile in the view from above, specifically in such a manner that the envelope (10) is of a concave configuration with respect to the direction of travel (4).

5. Undercarriage according to at least one of the preceding claims, **characterized in that** a braking device is assigned at least to the respectively laterally outermost tyres (8') of the roller (1, 12, 13, 14).

## Revendications

1. Châssis pour une machine agricole, en particulier une machine de travail du sol et/ou d'épandage, comprenant plusieurs pneus disposés en série les uns à côté des autres, qui forment un rouleau pneumatique du type d'un rouleau divisé (1), les pneus (8) étant disposés au moyen de bras oscillants (6) disposés de manière solidaire en rotation sur une poutre de support (5) s'étendant transversalement par rapport à la direction de conduite (4) de la machine, au moins certains des pneus (8) qui sont adjacents les uns aux autres dans la position de travail du rouleau (1), étant disposés de manière décalée les uns des autres dans la direction de conduite (4), les pneus (8) du rouleau (1) pouvant être abaissés de la position de travail dans une position de transport dans laquelle au moins certains des pneus (8) forment le châssis de l'appareil, et pouvant être soulevés d'une position de transport dans une position de travail, par rotation de la poutre de support (5) autour d'un axe de rotation s'étendant transversalement à la direction de conduite (4), **caractérisé en ce qu'**au moins certains des pneus (8) sont disposés sur la poutre de support (5) dans la position de transport de l'appareil au moyen des bras oscillants (6) de telle sorte qu'une courbe d'enveloppe (10) appliquée à la surface d'appui (9) des pneus (8) sur le sol présente une allure montant vers le centre de la machine.

2. Châssis selon la revendication 1, **caractérisé en ce que** la courbe d'enveloppe (10) s'étend en forme de voûte.

3. Châssis selon la revendication 1, **caractérisé en ce que** la courbe d'enveloppe (10) s'étend sous forme concave.

4. Châssis selon au moins l'une quelconque des revendications précédentes, **caractérisé en ce qu'**une courbe d'enveloppe (10) appliquée à la surface périphérique (9) la plus en avant la plus en avant et/ou la plus en arrière des pneus (8) du rouleau (1, 12, 13, 14) se trouvant dans la position de travail s'étend, en vue de dessus, avec une courbure telle que la courbe d'enveloppe (10) soit configurée sous forme concave par rapport à la direction de conduite (4).

5. Châssis selon au moins l'une quelconque des revendications précédentes, **caractérisé en ce qu'**un dispositif de freinage est associé au moins aux pneus latéralement les plus extérieurs (8') du rouleau (1, 12, 13, 14).
